# FASCICULE DE BREVET EUROPEEN

(11) **EP 0 798 154 B1**
(45) Date de publication et mention de la délivrance du brevet: **07.06.2000**
(21) Numéro de dépôt: 97400641.3
(22) Date de dépôt: 21.03.1997
(51) Int. Cl.: B60N 2/12

(54) **Glissière pour siège de véhicule, et siège comportant une telle glissière**
Fahrzeugsitzschiene und Sitz damit
Slide for vehicle seat and seat with such a slide

(30) Priorité: 25.03.1996 FR 9603686
(43) Date de publication de la demande: 01.10.1997
(73) Titulaire: BERTRAND FAURE EQUIPEMENTS S.A., 92100 Boulogne (FR)
(72) Inventeur: Feuillet, Patrick, 61100 Saint Georges Les Groseillers (FR)
(74) Mandataire: Burbaud, Eric

(56) Documents cités:
- FR-A- 2 686 383
- US-A- 1 684 944
- US-A- 4 449 752
- US-A- 4 666 208

## Description

La présente invention est relative aux glissières pour sièges de véhicules, et aux sièges comportant de telles glissières.

Parmi les glissières en question, l'invention concerne plus spécialement celles qui sont destinées à supporter une assise de siège dont la position longitudinale doit pouvoir être réglée à la convenance d'un utilisateur et qui doit également pouvoir être déplacée rapidement vers l'avant pour permettre l'accès à un espace situé à l'arrière du siège, puis être déplacée rapidement vers l'arrière pour retrouver une position d'utilisation.

Ces glissières sont utilisées notamment pour supporter des sièges avant de véhicules automobiles à deux portes, sièges que l'on fait coulisser vers l'avant afin de dégager un accès aux places arrière du véhicule.

Afin de permettre cet accès aux places arrière, de telles glissières doivent pouvoir être déverrouillées pour permettre un coulissement rapide vers l'avant, et elles doivent en outre se reverrouiller ensuite automatiquement lorsqu'on fait coulisser le siège vers l'arrière.

On connaît de telles glissières qui comportent :
- un premier profilé dit fixe, destiné à être solidarisé avec le véhicule,
- un deuxième profilé dit mobile, destiné à supporter une assise de siège, ce profilé mobile étant disposé parallèlement au profilé fixe et monté coulissant le long dudit profilé fixe, dans une direction dite longitudinale,
- un verrou monté sur le profilé mobile, ce verrou étant déplaçable entre d'une part une position verrouillée où il coopère avec le profilé fixe pour immobiliser les deux profilés l'un par rapport à l'autre, et d'autre part une position déverrouillée où il ne coopère plus avec le profilé fixe et permet un coulissement du profilé mobile par rapport au profilé fixe,
- un ressort de verrou sollicitant le verrou vers sa position verrouillée,
- des moyens pour déplacer le verrou de sa position verrouillée à sa position déverrouillée,
- une came montée rotative sur le profilé mobile entre deux positions angulaires stables, savoir d'une part une position active où la came agit sur le verrou en le maintenant dans sa position déverrouillée, et d'autre part une position de repos où la came ne coopère pas avec le verrou, cette came présentant également une position angulaire dite neutre entre ces deux positions de butée, et ladite came étant en outre solidaire d'un doigt d'actionnement rigide,
- des moyens pour déplacer la came de sa position de repos à sa position active,
- un ressort de came sollicitant la came vers sa position active lorsque ladite came est dans une position angulaire comprise entre sa position neutre et sa position active, et sollicitant la came vers sa position de repos lorsque ladite came est dans une position angulaire comprise entre sa position neutre et sa position de repos,
- et au moins un organe de butée qui est monté sur le profilé fixe et qui n'interfère pas avec le doigt d'actionnement lorsque la came est en position de repos, cet organe de butée étant apte à coopérer avec ledit doigt d'actionnement pour s'effacer devant ce doigt d'actionnement lorsque le profilé mobile est déplacé vers l'avant avec la came en position active, et pour constituer une butée fixe vis-à-vis du doigt d'actionnement lorsque le profilé mobile est déplacé vers l'arrière avec la came en position active, l'organe de butée et le doigt d'actionnement étant conçus pour que le doigt d'actionnement fasse alors pivoter la came depuis sa position active jusqu'au-delà de sa position neutre, de sorte que ladite came est ensuite ramenée dans sa position de repos par le ressort de came, ce qui permet au verrou de revenir dans sa position verrouillée sous l'effet du ressort de verrou, la glissière étant par ailleurs conçue pour que la came, une fois placée dans sa position active, reste dans ladite position active tant que le doigt d'actionnement ne l'a pas fait pivoter.

Ainsi, l'organe de butée et le doigt d'actionnement garantissent que lorsqu'on a avancé le siège pour accéder aux places arrière du véhicule, et qu'on recule ensuite ce siège, la glissière se reverrouille dès que le siège atteint une position fixe prédéterminée.

Dans ces glissières connues, l'organe de butée est constitué par un mécanisme relativement complexe et coûteux qui comporte un support métallique horizontal fixé à ce support, une biellette montée pivotante sur cet axe et sollicitée vers une position de repos par un ressort de rappel, cette biellette comportant une surface inclinée apte à s'effacer sous le doigt d'actionnement de la came lorsque le profilé mobile est déplacé vers l'avant avec la came dans sa position active, et ladite biellette comportant en outre une face de butée qui arrête le doigt d'actionnement lorsque le profilé mobile est déplacé vers l'arrière avec la came dans sa position active.

Par ailleurs, le document US-A-4 449 752 décrit une glissière comportant une plaque de mémorisation 12 flexible qui s'étend transversalement et qui permet de retenir le verrou de la glissière en position déverrouillée sur une faible course.

La présente invention a notamment pour but de pallier ces inconvénients et de proposer une glissière du genre en question qui présente un organe de butée simple et peu coûteux.

A cet effet, selon l'invention, une glissière du genre en question est caractérisée en ce que l'organe de butée est constitué par une lame métallique élastique qui s'étend dans ladite direction longitudinale entre d'une part une extrémité fixe solidaire du profilé fixe et d'autre part une extrémité libre déplaçable verticalement, cette lame élastique présentant, à partir de son extrémité fixe, une portion montante qui s'étend en biais vers le haut et vers l'avant, le doigt d'actionnement appuyant sur cette portion montante en la faisant fléchir élastiquement vers le bas lorsque le profilé mobile est déplacé vers l'avant avec la came dans sa position active, et la lame élastique présentant en outre au voisinage de son extrémité libre une portion d'arrêt qui forme la butée fixe susmentionnée pour le doigt d'actionnement lorsque le profilé mobile est déplacé vers l'arrière avec la came dans sa position active.

Dans des modes de réalisation préférés, on a recours en outre à l'une et/ou à l'autre des dispositions suivantes :
- la portion montante de la lame élastique est prolongée vers l'avant par une portion descendante qui constitue ladite portion d'arrêt ;
- le profilé fixe comporte un fond horizontal sur lequel est montée l'extrémité fixe de la lame élastique ;
- le coulissement du profilé mobile vers l'arrière est limité par une position de butée arrière, le profilé fixe comportant des première et deuxième lames élastiques, la première lame élastique étant disposée pour coopérer avec le doigt d'actionnement lorsque le profilé mobile est dans sa position de butée arrière afin de faire alors pivoter la came dans sa position de repos, et la deuxième lame élastique étant disposée vers l'avant par rapport à la première lame élastique, dans une position correspondant à un réglage moyen de la glissière.

L'invention a également pour objet un siège de véhicule comportant un dossier et une assise montée coulissante longitudinalement au moyen d'au moins une glissière telle que définie ci-dessus, l'assise du siège étant fixée au profilé mobile de la glissière.

Avantageusement, les moyens pour déplacer la came de sa position de repos à sa position active comprennent un point d'attache fixé à un câble qui relie ladite came au dossier, ce câble étant monté pour déplacer la came dans sa position active lorsque le dossier est basculé vers l'avant.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique d'un siège de véhicule équipé de glissières selon l'invention,
- la figure 2 est une vue de détail partiellement écorchée d'une des glissières du siège de la figure 1,
- la figure 3 est une vue éclatée de la glissière de la figure 2,
- et les figures 4 et 5 sont des vues de détail montrant le fonctionnement des lames élastiques qui sont montées dans la glissière des figures 2 et 3.

Sur les différentes figures, les mêmes références désignent des éléments identiques ou similaires.

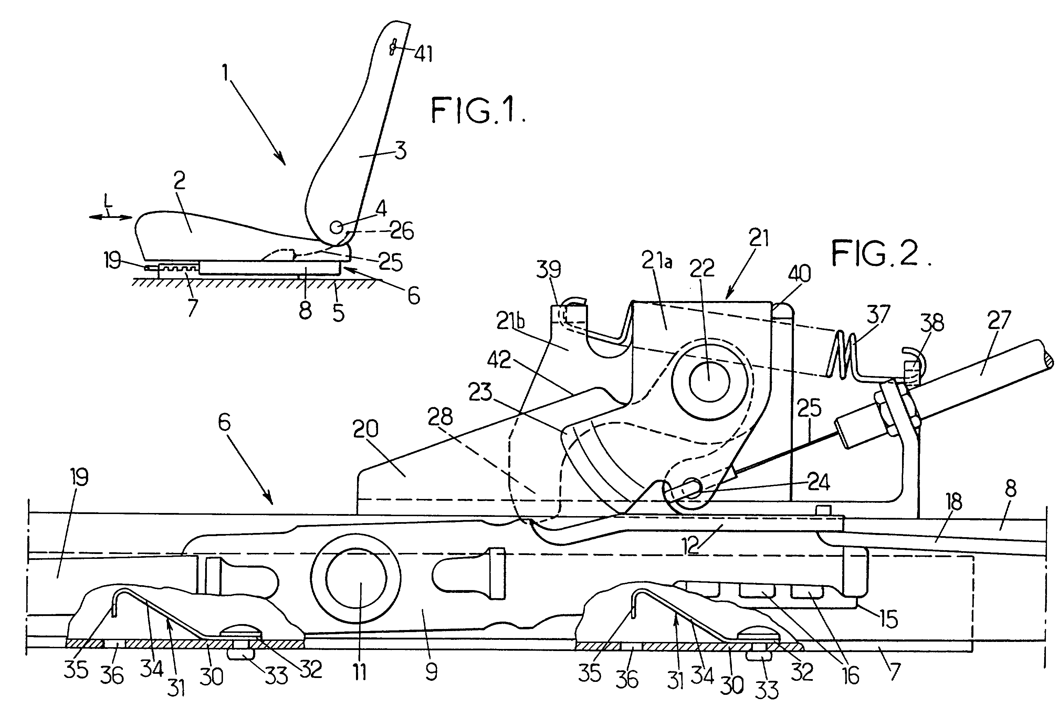

Comme représenté schématiquement sur la figure 1, l'invention s'applique à un siège de véhicule 1, notamment un siège avant de véhicule automobile à deux portes, c'est-à-dire un véhicule dans lequel il est nécessaire de déplacer au moins un des sièges avant pour accéder au siège arrière.

Le siège 1 comporte une assise 2 et un dossier 3 qui est monté pivotant sur l'assise 2 autour d'un axe transversal 4 horizontal.

L'assise 2 est montée sur le plancher 5 du véhicule au moyen de deux glissières juxtaposées 6, dont une seule est visible sur la figure 1, de façon à permettre une translation de l'assise 2 dans une direction longitudinale L, vers l'avant ou vers l'arrière.

Chacune des glissières 6 comporte d'une part un profilé métallique fixe 7 qui présente une section sensiblement en forme de U et qui est solidarisé au plancher 5 du véhicule, et d'autre part un profilé métallique mobile 8 sur lequel est montée l'assise 2 du siège, le profilé mobile pouvant coulisser le long du profilé fixe entre une position de butée avant et une position de butée arrière.

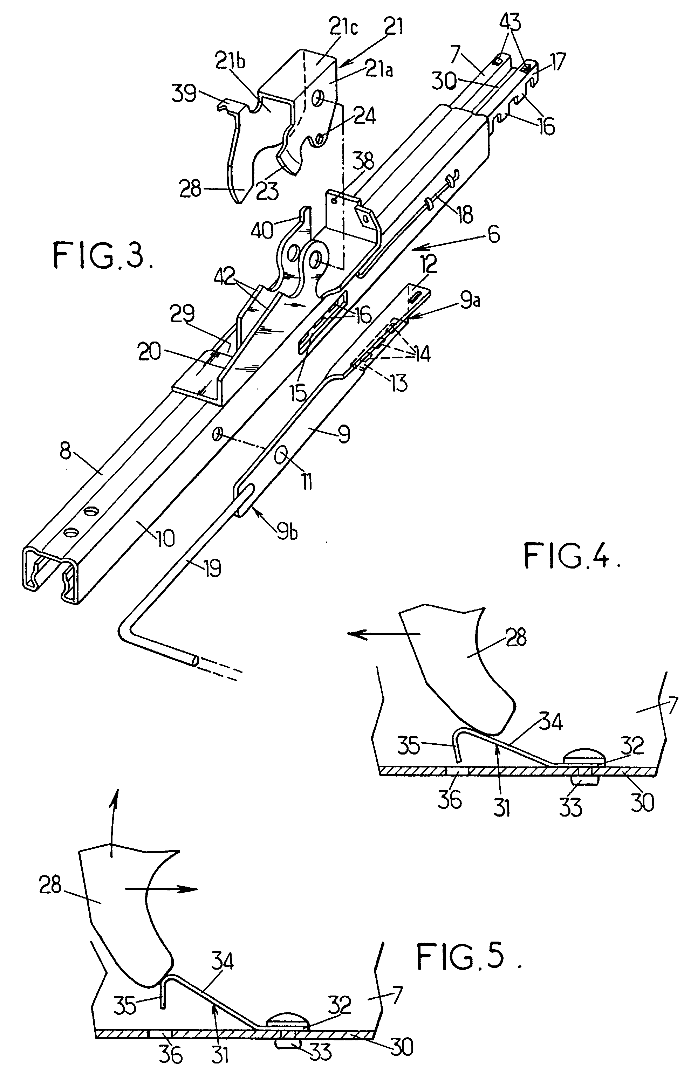

Au moins une des deux glissières 6 (et de préférence les deux glissières 6) comporte en outre un verrou 9 qui est représenté plus en détail sur les figures 2 et 3.

Ce verrou 9 est un levier métallique qui est disposé à l'extérieur du profilé mobile 8 et qui est monté sur une paroi latérale 10 de ce profilé mobile de façon à pouvoir pivoter autour d'un axe transversal horizontal 11.

Le verrou 9 s'étend longitudinalement entre des première et deuxième extrémités 9a, 9b qui sont disposées de part et d'autre de l'axe 11.

La première extrémité 9a du verrou présente d'une part une aile horizontale supérieure 12 qui est dirigée à l'opposé de la glissière 6 et dont l'utilité sera vue plus loin, et d'autre part une aile horizontale inférieure 13 qui pénètre avec un certain jeu vertical à l'intérieur du profilé mobile 8, par une fenêtre 15 ménagée dans la paroi latérale 10 de ce profilé mobile.

L'aile inférieure 13 du verrou est percée de plusieurs trous 14 qui sont disposés en correspondance avec des dents 16 dirigées vers le bas formées sur le bord inférieur d'un rabat latéral 17 appartenant au profilé fixe 7.

Par ailleurs, la première extrémité 9a du verrou est sollicitée vers le haut par un fil métallique élastique 18 fixé sur la paroi latérale 10 du profilé mobile, de façon à placer ce verrou dans une position verrouillée où les dents 16 du profilé fixe sont engagées dans les trous 14 de l'aile inférieure 13 du verrou, ce qui immobilise le profilé mobile 8 par rapport au profilé fixe 7.

Par ailleurs, la deuxième extrémité 9b du verrou est dotée d'un organe d'actionnement 19 qui peut présenter notamment la forme d'une tige rigide s'étendant vers l'avant et rejoignant de préférence (mais non obligatoirement) un deuxième verrou 9 monté sur la deuxième glissière 6 du siège pour permettre un actionnement simultané des deux verrous.

L'extrémité avant de l'organe d'actionnement 19 peut être tirée vers le haut par un utilisateur du siège, de façon à faire pivoter le verrou 9 en abaissant la première extrémité 9a de ce verrou jusqu'à une position déverrouillée où les trous 14 de l'aile horizontale inférieure 13 dudit verrou n'interfèrent pas avec les dents 16 du profilé fixe.

L'utilisateur du siège 1 peut ainsi régler à volonté la position longitudinale de ce siège.

Par ailleurs, le profilé mobile 8 est solidaire d'une pièce métallique de support 20 qui porte un organe de commande 21 également métallique, monté pivotant sur la pièce de support 20 autour d'un axe horizontal transversal 22.

L'organe de commande 21 a une section transversale sensiblement en forme de U et présente deux ailes latérales 21a, 21b s'étendant vers le bas à partir d'une paroi de liaison supérieure 21c.

La première aile 21a de l'organe de commande s'étend vers le bas jusqu'à une came 23 qui présente un contour en arc de cercle centré sur l'axe 22 et qui est disposée au-dessus de l'aile supérieure 12 du verrou de façon à pouvoir appuyer sur ladite aile supérieure.

De plus, la première aile 21a de l'organe de commande comporte également un point d'accrochage 24 qui est fixé à une extrémité d'un câble métallique 25 qui coulisse dans une gaine 27 elle-même fixée à la pièce de support 20 à une de ses extrémités.

L'autre extrémité de ce câble est fixée au dossier 3 du siège en un point de fixation 26 (figure 1) qui est disposé pour que le rabattement du dossier 3 vers l'avant provoque une traction sur le câble 25.

La deuxième aile 21b de l'organe de commande 21, quant à elle, présente un doigt d'actionnement 28 recourbé vers le bas et vers l'arrière qui est disposé en correspondance avec un évidement 29 ménagé dans la partie supérieure du profilé mobile 8, de façon que ce doigt d'actionnement puisse pénétrer à l'intérieur de la glissière 6 jusqu'au voisinage du fond 30 du profilé fixe 7.

Par ailleurs, au moins une lame métallique élastique 31, et de préférence deux lames 31, sont fixées sur le fond 30 du profilé fixe de façon à interférer avec le doigt d'actionnement 28 lorsque ce doigt est placé au voisinage dudit fond 30.

Chacune de ces lames élastiques présente une extrémité arrière horizontale 32 qui est fixée au fond 30 du profilé fixe, par exemple au moyen d'un rivet 33.

A partir de son extrémité arrière 32, la lame élastique 31 présente d'abord une portion montante 34 qui s'étend vers l'avant et vers le haut jusqu'à une extrémité avant constituée par une portion d'arrêt 35 rabattue vers le bas. La portion montante 34 de chaque lame 31 forme de préférence un angle inférieur à 45 degrés avec le fond 30.

La portion d'arrêt 35 est déplaçable verticalement par flexion de la partie montante 34, le fond 30 du profilé fixe présentant de préférence un évidement 36 au droit de la portion d'arrêt 35 de façon que ce fond 30 n'interfère pas avec ladite portion d'arrêt lors du fléchissement de la portion montante 34.

Enfin, un ressort hélicoïdal de traction 37 est tendu entre deux points d'accrochage 38, 39 qui appartiennent respectivement à la pièce de support 20 et à la deuxième aile 21b de l'organe de commande et qui sont situés respectivement vers l'arrière et vers l'avant par rapport à l'axe 22.

De plus, la direction d'alignement des points d'accrochage 38, 39 passe normalement au-dessus de l'axe 22, de sorte que le ressort 37 maintien alors l'organe de commande 21 dans une position de repos où la paroi supérieure 21c de cet organe de commande est en appui contre une butée arrière 40 appartenant à la pièce de support 20.

Lorsque l'organe de commande 21 est dans sa position de repos, la came 23 n'interfère pas avec le verrou 9, et le doigt d'actionnement 28 ne pénètre que légèrement dans la glissière 6, sans interférer avec les lames métalliques élastiques 31.

Lorsqu'un utilisateur du véhicule veut accéder aux places arrière, il rabat le dossier 3 vers l'avant, par exemple en débloquant ce dossier 3 au moyen d'une poignée ou manette 41 (figure 1), et ce mouvement de rabattement provoque une traction sur le câble 25.

Le câble 25 entraîne alors un pivotement de l'organe de commande 21, ce qui déplace la came 23 et le doigt d'actionnement 28 vers le bas, le câble 25 entraînant ainsi l'organe de commande 21 au moins jusqu'au-delà d'une position neutre dans laquelle les points d'accrochage 38, 39 du ressort 37 sont alignés avec l'axe 22.

Ainsi, le ressort 37 place et maintient l'organe de commande 21 dans une position dite active où la paroi supérieure 21c de l'organe de commande est en appui contre une butée avant 42 appartenant à la pièce de support 20.

Dans cette position active, la came 23 appuie sur l'aile supérieure 12 du verrou en plaçant ce verrou dans sa position déverrouillée, et le doigt d'actionnement 28 est situé au voisinage du fond 30 du profilé fixe.

L'utilisateur peut alors repousser l'assise 2 du siège au maximum vers l'avant afin de dégager l'accès aux places arrière.

Au cours de ce mouvement, le doigt d'actionnement 28 peut éventuellement rencontrer une ou plusieurs lames élastiques 31, comme représenté sur la figure 4.

Dans ce cas, le doigt d'actionnement 28 appuie sur la portion montante 34 de ces lames élastiques en faisant fléchir cette portion montante vers le bas, de sorte que lesdites lames élastiques 31 s'effacent sous le doigt d'actionnement 28 et n'empêchent pas le déplacement de l'assise vers l'avant.

Lorsqu'on veut remettre le siège 1 en position d'utilisation, on relève le dossier 3, et on tire l'ensemble du siège 1 vers l'arrière.

Au cours de ce mouvement, dès que le doigt d'actionnement 28 rencontre une portion d'arrêt 35 d'une lame élastique 31, comme représenté sur la figure 5, cette lame métallique élastique arrête le doigt 28 par effet d'arc-bou-tement en faisant pivoter le doigt d'actionnement 28 vers le haut jusqu'à ce que l'organe de commande 21 ait dépassé sa position neutre.

Le ressort 37 ramène ensuite l'organe de commande 21 dans sa position de repos et le fil métallique élastique 18 ramène le verrou 9 dans sa position verrouillée, de sorte que l'assise 2 du siège est à nouveau immobilisée par rapport au plancher 5 du véhicule.

De préférence, la glissière 6 comporte deux lames élastiques 31, l'une de ces lames étant disposée de façon que le reverrouillage de l'assise 2 s'effectue dans une position moyenne correspondant à un réglage longitudinal acceptable pour la plupart des utilisateurs du siège, et l'autre de ces lames étant disposée vers l'arrière du profilé fixe 7. La lame élastique 31 située le plus en arrière est prévue pour provoquer le retour de l'organe de commande 21 dans sa position de repos et le verrouillage du verrou 9 lorsque l'assise 2 est déplacée dans sa position de butée arrière, définie par des butée 43 qui sont formées à l'extrémité arrière du profilé fixe 7 et qui coopèrent avec des parties correspondantes (non représentées) déplaçables avec le profilé mobile 8.

Cette lame élastique 31 située la plus en arrière est utile lorsque le dossier 3 du siège a été rabattu vers l'avant sans déplacer l'assise 2 vers l'avant, ou en déplaçant cette assise 2 vers l'avant sur une distance trop faible pour que le doigt d'actionnement 28 ait dépassé la lame élastique 31 située la plus en avant.

En effet, dans ce cas, lorsque l'utilisateur relève le dossier 3 du siège, son effort de traction ramène forcément l'assise 2 du siège jusqu'en butée arrière, où la lame élastique 31 située la plus en arrière assure le verrouillage de la glissière 6 : cette lame élastique garantit donc que la glissière se reverrouille en toutes circonstances.

## Revendications

1. Glissière (6) pour siège de véhicule, comportant :
- un premier profilé (7) dit fixe, destiné à être solidarisé avec le véhicule,
- un deuxième profilé (8) dit mobile, destiné à supporter une assise (2) de siège, ce profilé mobile étant disposé parallèlement au profilé fixe et monté coulissant le long dudit profilé fixe, dans une direction dite longitudinale,
- un verrou (9) monté sur le profilé mobile (8), ce verrou étant déplaçable entre d'une part une position verrouillée où il coopère avec le profilé fixe (7) pour immobiliser les deux profilés l'un par rapport à l'autre, et d'autre part une position déverrouillée où il ne coopère plus avec le profilé fixe et permet un coulissement du profilé mobile par rapport au profilé fixe,
- un ressort de verrou (18) sollicitant le verrou vers sa position verrouillée,
- des moyens (19) pour déplacer le verrou de sa position verrouillée à sa position déverrouillée,
- une came (23) montée rotative sur le profilé mobile (8) entre deux positions angulaires stables, savoir d'une part une position active où la came agit sur le verrou (9) en le maintenant dans sa position déverrouillée, et d'autre part une position de repos où la came ne coopère pas avec le verrou, cette came présentant également une position angulaire dite neutre entre ces deux positions de butée, et ladite came étant en outre solidaire d'un doigt d'actionnement (28) rigide,
- des moyens (24) pour déplacer la came (23) de sa position de repos à sa position active,
- un ressort de came (37) sollicitant la came (23) vers sa position active lorsque ladite came est dans une position angulaire comprise entre sa position neutre et sa position active, et sollicitant la came vers sa position de repos lorsque ladite came est dans une position angulaire comprise entre sa position neutre et sa position de repos,
- et au moins un organe de butée (31) qui est monté sur le profilé fixe (7) et qui n'interfère pas avec le doigt d'actionnement (28) lorsque la came (23) est en position de repos, cet organe de butée étant apte à coopérer avec ledit doigt d'actionnement pour s'effacer devant ce doigt d'actionnement lorsque le profilé mobile (8) est déplacé vers l'avant avec la came en position active, et pour constituer une butée fixe vis-à-vis du doigt d'actionnement lorsque le profilé mobile est déplacé vers l'arrière avec la came en position active, l'organe de butée (31) et le doigt d'actionnement (28) étant conçus pour que le doigt d'actionnement fasse alors pivoter la came (23) depuis sa position active jusqu'au-delà de sa position neutre, de sorte que ladite came est ensuite ramenée dans sa position de repos par le ressort de came, ce qui permet au verrou (9) de revenir dans sa position verrouillée sous l'effet du ressort de verrou (18), la glissière étant par ailleurs conçue pour que la came, une fois placée dans sa position active, reste dans ladite position active tant que le doigt d'actionnement ne l'a pas fait pivoter,
**caractérisée en ce que** l'organe de butée (31) est constitué par une lame métallique élastique qui s'étend dans ladite direction longitudinale entre d'une part une extrémité fixe (32) solidaire du profilé fixe (7) et d'autre part une extrémité libre (35) déplaçable verticalement, cette lame élastique présentant, à partir de son extrémité fixe, une portion montante (34) qui s'étend en biais vers le haut et vers l'avant, le doigt d'actionnement (28) appuyant sur cette portion montante en la faisant fléchir élastiquement vers le bas lorsque le profilé mobile (8) est déplacé vers l'avant avec la came (23) dans sa position active, et la lame élastique (31) présentant en outre au voisinage de son extrémité libre une portion d'arrêt (35) qui forme la butée fixe susmentionnée pour le doigt d'actionnement (28) lorsque le profilé mobile (8) est déplacé vers l'arrière avec la came (23) dans sa position active.

2. Glissière selon la revendication 1, dans laquelle la portion montante (34) de la lame élastique est prolongée vers l'avant par une portion descendante (35) qui constitue ladite portion d'arrêt.

3. Glissière selon l'une quelconque des revendications 1 et 2, dans laquelle le profilé fixe (7) comporte un fond horizontal (30) sur lequel est montée l'extrémité fixe (32) de la lame élastique (31).

4. Glissière selon l'une quelconque des revendications précédentes, dans laquelle le coulissement du profilé mobile (8) vers l'arrière est limité par une position de butée arrière, le profilé fixe comportant des première et deuxième lames élastiques (31), la première lame élastique étant disposée pour coopérer avec le doigt d'actionnement (28) lorsque le profilé mobile (8) est dans sa position de butée arrière afin de faire alors pivoter la came (23) dans sa position de repos, et la deuxième lame élastique étant disposée vers l'avant par rapport à la première lame élastique, dans une position correspondant à un réglage moyen de la glissière.

5. Siège de véhicule comportant un dossier (3) et une assise (2) montée coulissante longitudinalement au moyen d'au moins une glissière (6) selon l'une quelconque des revendications précédentes, l'assise du siège étant fixée au profilé mobile (8) de la glissière.

6. Siège de véhicule selon la revendication 5, dans lequel les moyens pour déplacer la came (23) de sa position de repos à sa position active comprennent un point d'attache (24) fixé à un câble (25) qui relie ladite came au dossier (3), ce câble étant monté pour déplacer la came dans sa position active lorsque le dossier est basculé vers l'avant.

## Patentansprüche

1. Gleitschiene (6) für Fahrzeugsitz, mit:
- einem ersten Profil (7), genannt fest, das dazu dient mit dem Fahrzeug verbunden zu werden,
- einem zweiten Profil (8), genannt beweglich, das dazu dient, ein Sitzelement (2) des Sitzes zu tragen, wobei dieses bewegliche Profil parallel zum festen Profil angeordnet und gleitbeweglich entlang des festen Profils in eine Richtung, genannt Längsrichtung, angebracht ist,
- einem Riegel (9), der an dem beweglichen Profil (8) angebracht ist, wobei der Riegel einerseits zwischen einer verriegelten Position, wo er mit dem festen Profil (7) zusammenwirkt, um die beiden Profile zueinander festzulegen, und andererseits einer entriegelten Position bewegbar ist, wo er nicht mehr mit dem festen Profil zusammenwirkt und ein Gleiten des beweglichen Profils bezüglich des festen Profils ermöglicht,
- einer Riegelfeder (18), die den Riegel in seine Verriegelungsposition drängt,
- Verschiebeeinrichtungen (19) zum Verschieben des Riegels von seiner Verriegelungsposition in seine Entriegelungsposition,
- einem Nocken (23), der drehbeweglich an dem beweglichen Profil (8) zwischen zwei stabilen Winkelpositionen angebracht ist, nämlich einerseits einer aktiven Position, wo der Nocken auf den Riegel (9) einwirkt und ihn in seiner Entriegelungsposition hält, und andererseits einer Ruheposition, wo der Nocken nicht mit dem Riegel zusammenwirkt, wobei der Nocken ebenfalls eine Winkelposition genannt neutral zwischen diesen beiden Anschlagpositionen aufweist, und der Nocken darüber hinaus mit einem starren Betätigungsfinger (28) verbunden ist,
- Einrichtungen (24) zum Bewegen des Nockens (23) von seiner Ruheposition in seine aktive Position,
- einer Nockenfeder (37), die den Nocken (23) in seine aktive Position drückt, wenn sich der Nocken in einer Winkelposition zwischen seiner neutralen Position und seiner aktiven Position befindet, und den Nocken in seine Ruheposition drückt, wenn der Nocken sich in einer Winkelposition zwischen seiner neutralen Position und seiner Ruheposition befindet,
- und wenigstens einem Anschlagorgan (31), das an dem festen Profil (7) angebracht ist, und sich nicht mit dem Betätigungsfinger (28) überkreuzt, wenn sich der Nocken (23) in der Ruheposition befindet, wobei dieses Anschlagorgan in der Lage ist, mit dem Betätigungsfinger zusammenzuwirken, um vor dem Betätigungsfinger zu verschwinden, wenn das bewegliche Profil (8) nach vorne bewegt wird mit dem Nocken in aktiver Position, und um einen festen Anschlag gegenüber dem Betätigungsfinger zu bilden, wenn das beweglich Profil nach hinten versetzt wird mit dem Nocken in aktiver Position, wobei das Anschlagorgan (31) und der Betätigungsfinger (28) so ausgebildet sind, damit der Betätigungsfinger den Nocken (23) aus seiner aktiven Position über seine neutrale Position hinauszuschwenken veranlaßt, derart, daß der Nocken danach in seine Ruheposition durch die Nockenfeder zurückgebracht wird, was dem Riegel (9) ermöglicht, in seine Verriegelungsposition unter der Einwirkung der Riegelfeder (18) zurückzukommen, wobei die Gleitschiene darüber hinaus derart ausgestaltet ist, damit der Nocken einmal in seine aktive Position gesetzt, in der aktiven Position verbleibt, solange der Betätigungsfinger ihn nicht verschwenkt hat,
**dadurch gekennzeichnet**, daß das Anschlagorgan (31) aus einer elastischen Metallzunge oder -feder gebildet ist, die sich in die Längsrichtung zwischen einerseits einem festen Ende (32), das mit dem festen Profil (7) verbunden ist, und andererseits einem vertikal bewegbaren freien Ende (35) erstreckt, wobei diese elastische Feder ausgehend von ihrem festen Ende einen aufsteigenden Abschnitt (34) aufweist, der sich geneigt nach oben und nach vorne erstreckt, wobei der Betätigungsfinger (28) auf diesen aufsteigenden Abschnitt drückt und ihn nach unten elastisch verbiegt, wenn das beweglich Profil (8) nach vorne mit dem Nocken (23) in seiner aktiven Position bewegt wird, und die elastische Feder (31) darüber hinaus in der Nähe ihres freien Endes einen Halteabschnitt (35) aufweist, der den oben genannten festen Anschlag für den Betätigungsfinger (28) bildet, wenn das bewegliche Profil (8) nach hinten bewegt wird, mit dem Nocken (23) in seiner aktiven Position.

2. Gleitschiene nach Anspruch 1, bei der der aufsteigende Abschnitt (34) der elastischen Feder nach vorne durch einen absteigenden Abschnitt (35) verlängert wird, der den Halteabschnitt bildet.

3. Gleitschiene nach Anspruch 1 oder 2, bei der das feste Profil (7) einen horizontalen Boden (30) aufweist, auf dem das feste Ende (32) der elastischen Feder (31) angebracht ist.

4. Gleitschiene nach einem der vorhergehenden Ansprüche, bei der das Gleiten des beweglichen Profils (8) nach hinten durch eine hintere Anschlagposition begrenzt ist, wobei das feste Profil erste und zweite elastische Federn (31) aufweist, wobei die erste elastische Feder angeordnet ist, um mit dem Betätigungsfinger (28) zusammenzuwirken, wenn sich das bewegliche Profil (8) in seiner hinteren Anschlagposition befindet, um den Nocken (23) somit in seine Ruheposition zu verschwenken, und die zweite elastische Feder nach vorne bezüglich der ersten elastischen Feder angeordnet ist, in einer Position entsprechend einer mittleren Einstellung der Gleitschiene.

5. Fahrzeugsitz mit einer Rückenlehne (3) und einem Sitzelement (2), das längs gleitbeweglich mit Hilfe wenigstens einer Gleitschiene (6) nach einem der vorhergehenden Ansprüche angebracht ist, wobei das Sitzelement des Sitzes am beweglichen Profil (8) der Gleitschiene befestigt ist.

6. Fahrzeugsitz nach Anspruch 5, bei dem die Einrichtungen zum Bewegen des Nockens (23) von seiner Ruheposition in seine aktive Position einen Anhängpunkt (24), der an einem Kabel (25) befestigt ist, aufweist, das den Nocken mit der Rückenlehne (3) verbindet, wobei dieses Kabel angebracht ist, um den Nocken in seine aktive Position zu bewegen, wenn die Rückenlehne nach vorne verschwenkt wird.

## Claims

1. A slide (6) for a vehicle seat, the slide comprising:
a "fixed" first rail (7) designed to be secured to the vehicle;
a "moving" second rail (8) designed to support a seat proper (2), the moving rail being disposed parallel to the fixed rail and being mounted to slide along said fixed rail in a direction referred to as "longitudinal";
a latch (9) mounted on the moving rail (8), the latch being displaceable between firstly a locked position in which it co-operates with the fixed rail (7) to prevent the two rails from moving relative to each other, and secondly an unlocked position in which it no longer co-operates with the fixed rail and enables the moving rail to slide relative to the fixed rail;
a latch spring (18) urging the latch towards its locked position;
means (19) for displacing the latch from its locked position to its unlocked position;
a cam (23) mounted to rotate on the moving rail (8) between two stable angular positions, namely firstly an active position in which the cam acts on the latch (9) to hold it in its unlocked position, and secondly a rest position in which the cam does not co-operate with the latch, the cam also having a "neutral" angular position between the two abutment positions, and said cam further being secured to a rigid actuating finger (28);
means (24) for displacing the cam (23) from its rest position to its active position;
a cam spring (37) urging the cam (23) towards its active position when said cam is in an angular position between its neutral position and its active position, and urging the cam towards its rest position when said cam is in an angular position between its neutral position and its rest position; and
at least one abutment member (31) which is mounted on the fixed rail (7) and which does not interfere with the actuating finger (28) when the cam (23) is in the rest position, the abutment member being suitable for cooperating with said actuating finger so as to retract out of the way of the actuating finger while the moving rail (8) is being displaced forwards with the cam in the active position, and so as to constitute a fixed abutment relative to the actuating finger while the moving rail is being displaced backwards with the cam in the active position, the abutment member (31) and the actuating finger (28) being designed so that the actuating finger then causes the cam (23) to pivot from its active position to beyond its neutral position, so that said cam is then returned to its rest position by the cam spring, thereby enabling the latch (9) to return to its locked position under drive from the latch spring (18), the slide being designed so that, once the cam is placed in its active position, said cam remains in said active position so long as the actuating finger does not cause it to pivot;
said slide being characterized in that the abutment member (31) is constituted by a resilient metal blade which extends substantially in said longitudinal direction between firstly a fixed end (32) secured to the fixed rail (7) and secondly a free end (35) that can be displaced vertically, the resilient blade having a rising portion (34) which extends sloping upwards and forwards starting from its fixed end, the actuating finger (28) pressing against said rising portion so as to cause it to bend resiliently downwards while the moving rail (8) is being displaced forwards with the cam (23) in its active position, and the resilient blade (31) further having a stop portion (35) in the vicinity of its free end, which stop portion forms the above-mentioned fixed abutment for the actuating finger (28) while moving rail (8) is being displaced backwards with the cam (23) in its active position.

2. A slide according to claim 1, in which the rising portion (34) of the resilient cam is extended forwards by a falling portion (35) which constitutes said stop portion.

3. A slide according to claim 1 or 2, in which the fixed rail (7) includes a horizontal web (30) on which the fixed end (32) of the resilient blade (31) is mounted.

4. A slide according to any preceding claim, in which the backward sliding stroke of the moving rail (8) is limited by a back abutment position, the fixed rail being provided with first and second resilient blades (31), the first resilient blade being disposed so as to co-operate with the actuating finger (28) when the moving rail (8) is in its back abutment position so as then to cause the cam (23) to pivot into its rest position, and the second resilient blade being disposed in front of the first resilient blade, in a position corresponding to a mean slide setting.

5. A vehicle seat comprising a seat back (3) and a seat proper (2) mounted to slide longitudinally by means of at least one slide (6) according to any preceding claim, the seat proper being fixed to the moving rail (8) of the slide.

6. A vehicle seat according to claim 5, in which the means for displacing the cam (23) from its rest position to its active position comprise a fastening point (24) fixed to a cable (25) that connects said cam to the seat back (3), the cable being mounted so as to displace the cam into its active position when the seat back is tilted down forwards.
